# EUROPEAN PATENT SPECIFICATION

(11) **EP 3 404 898 B1**
(45) Date of publication and mention of the grant of the patent: **23.09.2020**
(21) Application number: 17305567.4
(22) Date of filing: 17.05.2017
(51) Int. Cl.: H04L 29/08

(54) **DEBUG DEVICE FOR DEBUGGING A SENSOR DEVICE, AND A DEBUG SYSTEM COMPRISING SAME**
FEHLERBESEITIGUNGSVORRICHTUNG ZUR BESEITIGUNG VON FEHLERN IN EINER SENSORVORRICHTUNG UND FEHLERBESEITIGUNGSSYSTEM DAMIT
DISPOSITIF DE DÉBOGAGE POUR DÉBOGUER UN DISPOSITIF CAPTEUR ET SYSTÈME DE DÉBOGAGE LE COMPRENANT

(43) Date of publication of application: 21.11.2018
(73) Proprietor: MEAS France, 31027 Toulouse Cedex 3 (FR)
(72) Inventor: MILPIED, Jean, F-31300 Toulouse (FR); GAUNARD, Florent, F-31500 Toulouse (FR); MARKEZANA, William, F-31000 Toulouse (FR)
(74) Representative: Grünecker Patent- und Rechtsanwälte PartG mbB

(56) References cited:
- US-A1- 2007 073 836
- LIMIN SUN ET AL: "MotePlat: A Monitoring and Control Platform for Wireless Sensor Networks", GRID AND COOPERATIVE COMPUTING WORKSHOPS, 2006. GCCW '06. FIFTH I NTERNATIONAL CONFERENCE ON, IEEE, PI, 1 October 2006 (2006-10-01), pages 452-458, XP031031167, ISBN: 978-0-7695-2695-9
- VELJKO KRUNIC ET AL: "NodeMD", MOBISYS '07 PROCEEDINGS OF THE 5TH INTERNATIONAL CONFERENCE ON MOBILE SYSTEMS, APPLICATIONS AND SERVICES; JUNE 11 - 14, 2007, SAN JUAN, PR, USA, ACM, NEW YORK, USA, 13 June 2007 (2007-06-13), pages 43-56, XP058231993, DOI: 10.1145/1247660.1247669 ISBN: 978-1-59593-614-1
- DONG WEI ET AL: "D2: Anomaly Detection and Diagnosis in Networked Embedded Systems by Program Profiling and Symptom Mining", 2013 IEEE 34TH REAL-TIME SYSTEMS SYMPOSIUM, IEEE, 3 December 2013 (2013-12-03), pages 202-211, XP032561513, ISSN: 1052-8725, DOI: 10.1109/RTSS.2013.28 ISBN: 978-1-4673-9507-6 [retrieved on 2014-01-29]

## Description

The invention relates to a debug device which is interfacing a sensor device and also interfacing a sensor network. This debug device further comprises the capabilities of debugging, in corporation with a remote server, the sensor device. Further, the invention relates to a debug system comprising same debug device.

In the context of the invention, a debug device shall be understood as a device which is separate from a sensor device, however, (electrically) connected thereto. For debug purposes, the debug device processes an output of the connected sensor device. Thus, the debug device is intended for use in field trial test campaigns. Advantageously, the debug device allows remote debugging in corporation with a remote server.

Different debug systems are know in this technical field. However, all known debug systems are designed for field trial test scenarios where the system engineer presence on-site is required for live debugging purposes. This debugging approach is inefficient and cumbersome, in particular for complex systems with a large number of highly specialized components (e.g. sensor devices) from different manufacturers.

US 2007/0073826 A1 relates to sensor node assistant apparatuses which provides a connection between a sensor node integrated development system and plural sensor nodes. This connection can be used for remotely installing a target software in the sensor nodes and/or to monitor operation states of the sensor nodes. Thereby, the testing and debugging of the sensor nodes is facilitated.

LIMIN SUN ET AL "Moteplat: A Monitoring and Control Platform for Wireless Sensor Networks", GRID AND COOPERATIVE COMPUTING WORKSHOPS; 2006. GCCW '06, FIFTH I INTERNATIONAL CONFERENCE ON; IEEE; PI; 1 October 2006, relates to a monitoring and control platform for wireless sensor networks (WSN) comprising software nodes and sink nodes. Therewith, users can remotely acquire node status information, and can also control the network to accomplish various tasks, e.g. debug software modules of sensor nodes and test the network performance. Particularly, the sink nodes are required as gateways between the sensor network and the Internet. Thus, a sink node has both WSN Interface module and WLAN Interface module, and transforms protocols between the two different networks.

In such complex systems the included sensor devices are seldom the cause of failures. Nevertheless, for verification purposes it is prescribed for any filed trial test campaign that all **components** of the system are tested and/or debugged in cooperation at a same time. Thus, there is a need for an improved debugging approach which alleviates the disadvantages identified above.

In this context, it is the purpose of the invention to provide a more efficient approach for debugging a sensor device, namely by relying on the capabilities of debug device in cooperation with a remote server which together allow access to and debugging of sensor data from a remote location, hence, far away from where the sensor device is deployed.

The present invention is defined by the appended independent claim 1.

Furthermore, several aspects of the embodiments may form - individually or in different combinations - solutions according to the present invention. Further features and advantages will be become apparent from the following more particular description of the various embodiments of the invention as illustrated in the accompanying drawings, in which like references refer to like elements, and wherein:
- **Fig. 1**: shows a schematic view of a debug system including a debug device according to an exemplary embodiment of the invention; and
- **Figs. 2 - 4**: depict a sequence diagram illustrating the operation of the debug device, for instance of the debug system according to an exemplary embodiment of the invention.

In the following, a detailed description of various embodiments of the debug device and the debug system according to invention is given. Notably, all of the various embodiments disclose a debug device which enables remotely debugging, in cooperation with a remote server, of an output of a sensor device for a sensor network. Consequently, these various embodiments all enable the access to and debugging of a sensor output at a remote location.

According to the invention, reference is made to different types of sensor data to be output by a sensor device, namely where a distinction is made between real sensor data and raw sensor data. This distinction is essential to understanding the full breadth of the invention, since these different types of sensor data undergo a different processing by the proposed debug device.

In the invention, the term "real sensor data" shall be understood as an output of a sensor device operating in its normal state, e.g. on a production site. In other words, in this normal state the sensor device outputs real sensor data which reflect a normal operation of the sensor device, i.e. corresponding to its intended use. Conventionally, end-users only know of this real sensor data and develop sensor networks for the processing thereof.

Notably, this real sensor data has already been subject to data processing within the sensor device, for instance, by filtering of a sensed input signal and mapping thereof into a pre-configured measurement range. In this respect, the real sensor data are inappropriate for debugging purposes, as they do not directly reflect the sensed input signal and/or are only indirectly indicate the health state of the sensor device.

Distinct from the real sensor data, the term "raw sensor data" shall be understood as a reference to the output of a sensor device operating in its debug state (also known as the calibration state) generally used for field trail testing campaigns. This raw sensor data is only output by a sensor device when the sensor device specifically configured to be in the debug state and not in the normal state. Conventionally, end-users do not know of this raw sensor data as this is mainly used by the manufacturers for development purposes only.

Notably, this raw sensor data is unaffected by data processing within the sensor device. In other words, the sensor device directly outputs the signal of the sensed input as raw sensor data without any filtering of or mapping into a pre-configured measurement range. Accordingly, the raw sensor data directly reflects the sensed input signal and directly indicates the health state of the sensor device. Notably, a subsequent processing of raw sensor data requires a sensor specific interpretation by a subsequent data processing unit.

In the various embodiments, reference is made to a sensor device which can output both, the real sensor data and the raw sensor data in a separate manner. Nevertheless, it is not important that the output device outputs both, the real sensor data and the raw sensor data via separate (physical and/or logical) interfaces. Moreover, both types of sensor data may also be separately output via a same (i.e. single) interface, for instance, in a time division or frequency division manner. The implementation solely depends on the customary practice of the sensor manufacturer.

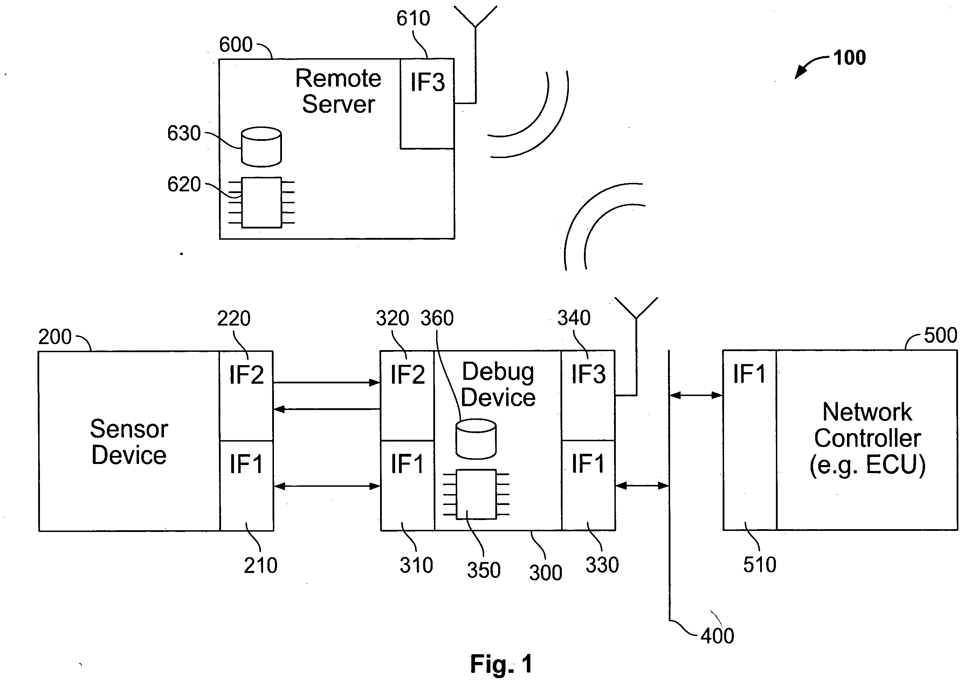

With reference to Fig.1, an exemplary embodiment of a debug system 100 according to the invention is shown in a schematic view. The term "debug system" shall be understood broadly as referring to various devices and/or units processing the outputs of a sensor device. Notably the debug system is not restricted to the processing of only one of the real sensor data and the raw sensor data, but instead extends to the processing of any sensor outputs.

As illustrated, the debug system 100 according to the exemplary embodiment comprises a sensor device 200, a debug device 300, and a sensor network 400 optionally with a network controller device 500. Notably, in the debug system 100, the debug device 300 is interfacing the sensor device 200 as well as the sensor network 400. In other words, the debug device 300 is interposed in-between the sensor device 200 and the sensor network 400.

In this debug system 100, the sensor device 200 is not directly connected to the sensor network 400. Instead, the outputs from the sensor device 200 are received by the debug device 300 and may thereupon be transmitted (e.g. as relay or proxy) by debug device 300 to the sensor network 400. Thereby, only the debug device 300 and not the sensor device 200 interfaces the sensor network 400, and hence provides for the opportunity for reconfiguring sensor device 200 while the sensor network 400 remains operational.

In an exemplary implementation, the sensor device 200 is a physical sensor including at least one of a pressure sensor, and accelerometer, a vibration sensor, a thermal sensor, a humidity sensor, a magnetic sensor, a rotation sensor, a camera, a microphone and/or other sensors readily known in the art. In this respect, sensor device 200 outputs, as real sensor data, a pressure value, and accelerometer value, a vibration value, a thermal value, a humidity value, a magnetic value, a rotational speed, an image data, a sound data and/or further data values, respectively.

Advantageously, such a sensor device 200 additionally outputs, when configured in debug state, raw sensor data including at least one of an input voltage reflecting the sensors power supply, and an output voltage reflecting the sensed input signal without any applied data processing, for instance, filtering thereof or mapping into a pre-configured measurement range. Additionally, the sensor device may also output information regarding its internal state.

Further to the exemplary implementation, the debug device 300 is a physical computing device with a small form-factor which provides suitable processing capabilities, for instance, in form of a processor 350 and additionally interfaces 310, 320, and 330 for communicating with the sensor device 200 and the sensor network 400. Advantageously, the debug device 300 is built with a mechanically robust and hermetically sealed housing to endure long-term debugging of sensor outputs in rough field trial testing environments.

Also in the exemplary implementation, the sensor network 400 includes a network controller 500 which is a physically separate device which provides, for instance, the function of an electronic control unit, ECU. Hereby, the network controller 500 controls the distribution of sensor data in the sensor network 400 and the subsequent processing thereof. Such a network controller 500 is generally required for managed (infrastructure) networks and not required in ad-hoc networks. The network controller 500 provides further functions, which however are not subject to the present application, and thus have been omitted for conciseness reasons.

In the exemplary embodiment, the data communication between the sensor device 200, the debug device 300 and the sensor network 400 is realized via interfaces 310, 320, and 330 readily known in the art. Specifically, the use of same type of interfaces 310, 330 for interfacing the debug device 300 with the sensor device 200, and with the sensor network 400 advantageously extends the deployment scenarios of the debug device 300. In order to start or stop the debugging in a field trial testing environment, the debug device 300 can simply due to the same type of interfaces 310, 330 be connected in-between or removed from the connection between the sensor device 200 and the sensor network 400.

Referring now to the data communication between the sensor device 200 and the debug device 300 in more detail:
For this purpose, the sensor device 200 and the debug device 300 are connected with each other through interfaces 210, 310 which are of the same type as the interfaces 330 through which the debug device 300 and the sensor network 400 are connected with each other. This, however, only applies to the interfaces 210, 310, and 330 utilized for transmitting and/or receiving the real sensor data, not to the interface utilized for transmitting and/or receiving the raw sensor data, where different type of interfaces are utilized.

In the exemplary embodiment, the sensor device 200 includes a first interface 210 for transmitting the real sensor data and a second interface 220 for transmitting the raw sensor data to the debug device 300. Also, the debug device 300 includes a first interface 310 for receiving the real sensor data and a second interface 320 for receiving the raw sensor data. Both, the first interfaces 210 and 310 and the second interfaces 220, 320 are realized in form of a wired interface, i.e. with physical wires enabling a bi-directional data communication between the sensor device 200 and the debug device 300.

The sensor device 200 is connected with its first interface 210 to the respective first interface 310, and with its second interface 220 to the respective second interface 320 of the debug device 300, both enabling the respective data communication there-between. Accordingly, the debug device 300 is configured to receive real sensor data via first interface 310 and raw sensor data via second interface 320 from the sensor device 300.

From this configuration, it immediately becomes apparent that the debug device 300 prescribes the deployment in close proximity to the sensor device 200. In other words, due to requirements on signal integrity and propagation delays for the wired data communication via both, the first interfaces 210 and 310 and the second interfaces 220 and 320, it shall be emphasized that the debug device 300 cannot be positioned at a remote location, far away from the sensor device 200.

This exemplary embodiment only discloses a one-to-one relationship between sensor device 200 and debug device 300. However, this shall not be understood as a restriction of the debug device 300 since this debug device 300 may also be configured in form of a one-to-many relationship for interfacing a plurality of sensor devices.

In an alternative exemplary embodiment, for each of plural sensor devices, the debug device 300 is provided with a first and/or second interface enabling the dedicated data communication therewith, or, alternatively, with a single one of each of the above described first and second interface 310 and 320, being configured for a time shared and/or frequency shared data communication between all of the sensor devices.

According to an exemplary implementation, the first interface 210 of sensor device 200 and the first interface 310 of debug device 300 are both provided as at least one of a Controller Area Network, CAN, bus interface, a Local Interconnect Network, LIN, bus interface, and a Single Edge Nibble Transmission, SENT, interface, respectively configured to establish a data connection between the sensor device 200 and the debug device 300.

Additionally, the second interface 220 of sensor device 200 and the second device 320 of debug device 300, are both provided as at least one of a General Purpose Input/output, GPIO, interface, a Inter-Integrated Circuit, I2C, bus interface, a Joint Test Action Group, JTAG, interface, respectively configured to establish another (i.e. separate) data connection between the sensor device 200 and the debug device 300.

Referring now to the data communication between the debug device 300 and the sensor network 400 and/or the network controller 500 in more detail:
For this purpose, the debug device 300 additionally includes a third interface 330 for transmitting the received real sensor data to the sensor network 400 and/or to the network controller 500. In case of a managed (infrastructure) network, at least the network controller 500, and in case of an ad-hoc network (not shown), at least one recipient within the sensor network, includes a first interface 510 for receiving the real sensor data from the debug device. Both, the third interface 330 and the first interface 510 are realized as wired interface, i.e. with physical wires enabling a bi-directional data communication with the debug device 300.

The debug device 300 is connected with its third interface 330 to the respective first interface 510 of the network controller 500 enabling the data communication there-between. Accordingly, the debug device 300 is configured to transmit (e.g. as relay or proxy) the real sensor data received via first interface 310 from the sensor device 200 to the network controller 500.

Advantageously, the first interface 310 and the third interface 330 of debug device 300 are realized with the same type of interfaces. Thereby, the deployment scenarios of the debug device 300 are extended as discussed before. Further, this use of same interfaces also overcomes the need for signal conversions of the real sensor data between its reception via the first interface 210 and its transmission via the third interface 330.

In other words, despite the fact that debug device 300 receives and transmits the real sensor data, the processing thereof can be minimized, thereby reducing also transmission delays and jitter in the data communication. Additionally, the use of same type of interfaces also facilitates a data communication in the reverse direction, namely from the third interface 330 to the first interface 310.

In this respect, the sensor device 200 can be fully addressed and accessed from the sensor network 400 despite of the presence of the debug device 300. Accordingly, at least in some modes of operation of the debug device 300 (e.g. in debug and normal operation), the debug device 300 is transparent to the data communication between the sensor device 200 and the sensor network 400 and/or network controller 500.

In an exemplary implementation, the third interface 330 of debug device 300 and the corresponding interface 510 of the network controller 500 are both realized as at least one of a Controller Area Network, CAN, bus interface, a Local Interconnect Network, LIN, bus interface, and a Single Edge Nibble Transmission, SENT, interface, respectively configured to establish a data connection between the debug device and the network controller device 500 via sensor network 400.

Advantageously, the debug device 300 also filters the data communication between the sensor device 200 and the sensor network 400 and/or network controller 500. In more detail, the third interface 330 of the debug device 300 receives data packets/streams transmitted via the sensor network 400 and immediately filters out (e.g. discards) all data communication which is not directly for the sensor device 200 and/or the debug device 300 (as relay or proxy). In other words, the third interface 330 filters out addresses which are not of the sensor device 200 and/or to the debug device 300.

With this filtering, the debug system 100 can ensured that broadcast data or even confidential data, which is communicated over the sensor network 400, cannot be accessed in the debug device 300 and/or the sensor device 200. This is beneficial with regard to a debugging of a complex system in field trial test campaigns. In these scenarios, the system operator may have privacy concerns regarding the data communicated over the sensor network 400, which are mitigated with this filtering in the debug device 300.

Referring now to the data communication between the debug device 300 and the remote server 600 in more detail:
The debug system 100 further comprises for debugging purposes a remote server 600 which is deployed separately from the sensor network 400 and/or the network controller 500. In corporation with this remote server 600, the debug device 300 enables access to and debugging of raw sensor data from a remote location, hence, at far distance from where the sensor device is deployed.

Specifically, the remote server 600 comprises a memory 630 for storing the raw sensor data received via the first interface 610; and a processor 620 configured to perform statistical validation operations (e.g. calculation of mean values, printing of time graphics, or aberrant measures) on the stored raw sensor data. Further, the processor 620 is configured to upload updated libraries to the debug device 300 via the first interface 610. Also the processor 620 is configured to process raw sensor data with the same updated libraries, namely where the libraries provide the software necessary for a sensor specific interpretation of the raw sensor data.

In other words, due to the cooperation between debug device 300 and remote server 600, the debugging especially of raw sensor data (optionally also real sensor data) is possible without physical presence of a system engineer on-site at the field trial test campaign for sensor device 200 and/or sensor network 400. By transmitting especially the raw sensor data from the debug device 300 to the remote server 600, remote access to the values corresponding to the sensed input signal of the sensor device 200 is enabled without any filtering of or mapping into a pre-configured measurement range.

For this purpose, the debug device 300 and remote server 600 are connected with each other through wireless interfaces 340, 610 which are different from the wired interfaces 220, 320 via which the raw sensor data is transmitted from the sensor device 200 to the debug device 300.

Specifically, the debug device 300 comprises a fourth interface 340 for transmitting the raw sensor data, and additionally the remote server 600 comprises a first interface 610 for receiving the raw sensor data. Both, the fourth interface 340 and the first interface 610 are realized in form of a wireless interface, i.e. radio interface enabling a bi-directional data communication between the debug device 300 and the remote server 600.

Further, the debug device 300 is connected with its fourth interface 340 to the respective first interface 610 of the remote server 600 to enable a data connection there-between. Accordingly, the debug device 300 is configured to transmit raw sensor data received from the sensor device 200 via the second interface 320 to the remote server 600. Through respective wireless interfaces, i.e. radio interfaces, the debug device 300 and remote server 600 enables access to and debugging of the raw sensor output corresponding to a sensed input signal of the sensor device 300.

Advantageously, the second interface 320 and the fourth interface 340 of the debug device 300 are realized with different types of interfaces. Thereby, the debug device 300, in corporation with the remote server 600, enables access to and debugging of the sensor device 200 at a remote location, hence, far away from where the sensor device is deployed.

According to an exemplary implementation, the fourth interface 340 of debug device 300 and the first interface 610 of remote server 600 are both provided as at least one of a Global System for Mobile Communications, GSM, interface, a Universal Mobile Telecommunications System, UMTS, interface, a Long Term Evolution, LTE, interface, and a Long Range, LoRa, Wide Area Network, WAN, interface, respectively configured to establish a data connection between the debug device 300 and the remote server 600.

Referring now to the operation, especially the debug operation, of the debug device 300:
As already detailed above, the debug device 300 further comprises a processor 350 configured to perform specific operations within the debug system 100. Notably, the processor 350 performs its operations in accordance with an internal state of the sensor device 200. Specifically, the processor 350 of the debug device 300 performs at least one of a reconfig operation, a debug operation, a normal operation, and an update operation which will be discussed in further detail below.

For almost all of these operations of the debug device 300, the processor 350, in advance, has to control (i.e. set) the sensor device 200 to assume a corresponding internal state. The sensor device can assume one of plural pre-configured internal states, including at least one of the following pre-defined states of a reconfiguration state, a debug state, and a normal state. Only for the update operation of the debug device 300, the processor does not require setting the sensor device 200 to a specific state; rather, since the update operation only affects the debug device 300, it is independent of the internal state of sensor device 200.

When the sensor device 200 is set to be in the normal state, the processor 350 of the debug device 300 is configured to perform a normal operation, including receiving the real sensor data via the first interface 310, logging same real sensor data within the debug device 300, and transmitting (i.e. forwarding) same real sensor data via the second wired interface 330. In this normal state, the sensor device 200, as discussed before, does not transmit any raw sensor data, such that same can neither be received via the first interface 310, nor be transmitted via the third interface 330 in the debug device 300.

Alternatively, when the sensor device 200 is set to be in the debug state, the processor 350 of the debug device 300 is configured to perform a debug operation. This debug operation includes receiving the real sensor data via the first interface 310, logging same real sensor data within the debug device 300, and transmitting same via the second wired interface 330. Additionally, the debug operation includes receiving the raw sensor data via the second interface 320, logging same raw sensor data within the debug device 300, and transmitting same raw sensor data, at least in part, via the third wireless interface 340.

In other words, when the sensor device 200 is set to be in the debug state, the processor 350 of the debug device 300 is configured to perform the debug operation which does not only process the received real sensor data (as in the normal operation) but also processes the received raw sensor data. Specifically, as mentioned before, this debug operation also logs and transmits the raw sensor data, thereby enabling the access to and debugging of the sensor device 200 from a remote location, hence, far away from where the sensor device is deployed.

In an exemplary implementation, the debug device 300 further comprises, for logging of the real sensor data and/or raw sensor data a memory 360, preferably a non-volatile memory, configured for storing the received real sensor data and/or raw sensor data in a first-in /first-out, FIFO data structure of a predefined size. In this respect, only the most recent sensor data is stored in the memory of the debug device 300, thereby facilitating a long-term debugging of the sensor outputs. Exemplarily, the predefined size of the data structure in the memory contains at least 100, preferably at least 1000 sets of sensor data, each comprising the received real sensor data, the determined state of the sensor device, and, if available, the received raw sensor output.

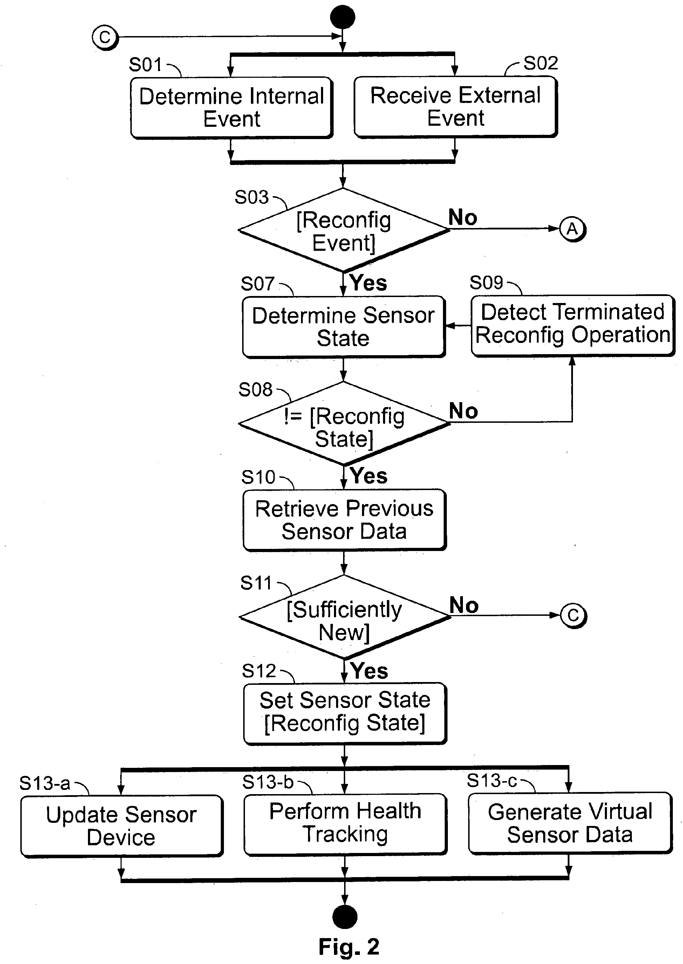

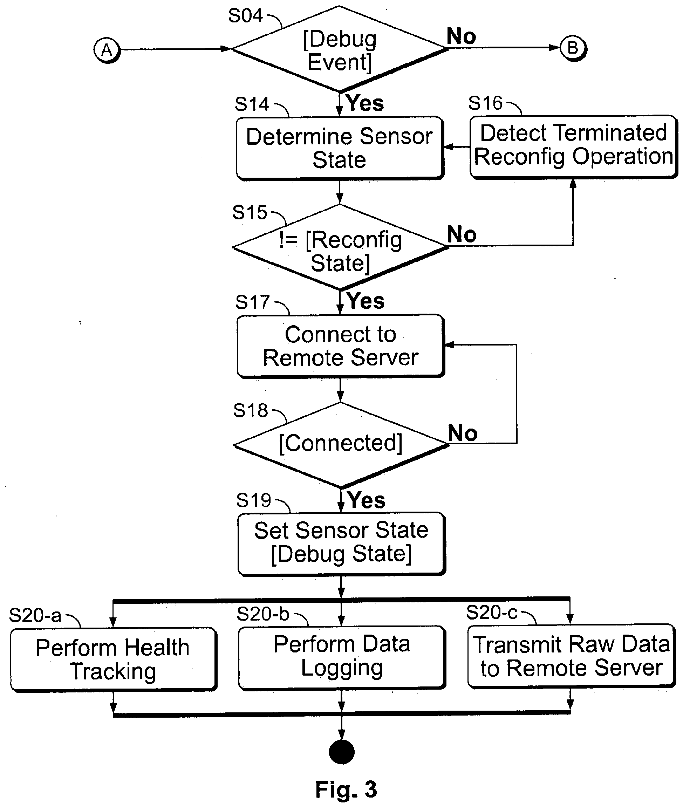

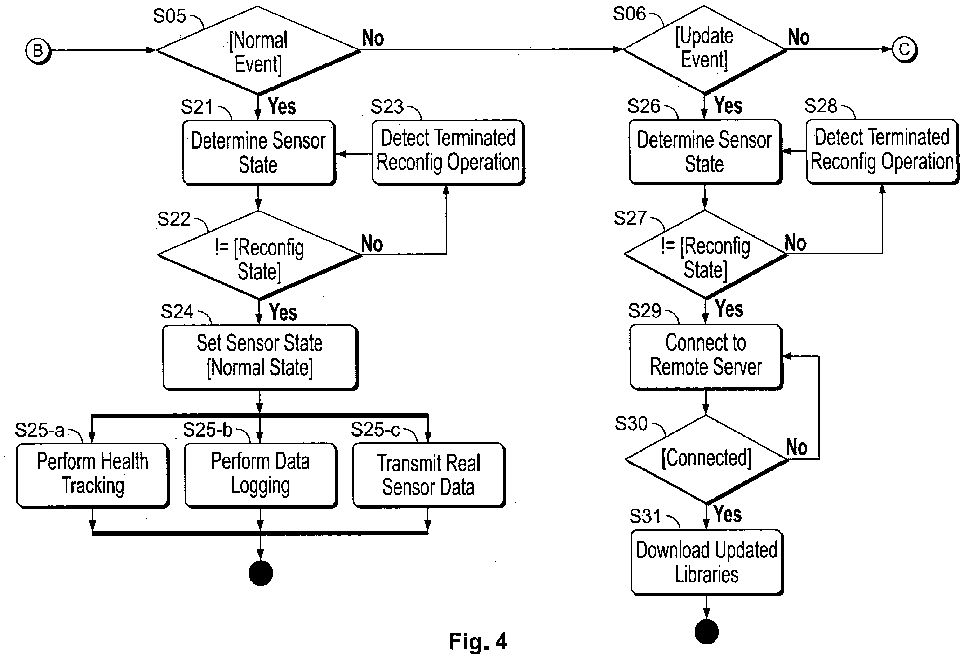

Referring now to the operation of the debug device 300:
With reference to Figs. 2 - 4 the operation of the debug device 300, within the debug system 100 shall be described in more detail in accordance with an exemplary embodiment of the invention. The three figures shall be interpreted in combination, not separately from each other, such as depicting a single sequence diagram of the operation of the debug device 300. Moreover, for an improved clarity, some inter-connections in the sequence flow have been abbreviated via capital characters (i.e. A, B, C).

In the debug device 300 of the exemplary implementation, any operation by processor 350 is triggered by either one of an internal event or an external event. In the context of the invention, the term "internal event" shall be understood as a pre-configured reaction to a specific outcome of an (internal) operation of the processor 350 (e.g. a detection of non-operational state of the sensor device). Further, the term "external event" shall be understood as a pre-configured reaction to a reception of specific (external) information via the fourth interface 340 of the debug device 300 (e.g. in form of a control message).

In this exemplary implementation, each of the internal event or the external event includes at least one of a normal event, a debug event, a reconfig event or an update event, which are being discussed in the following. In other words, neither the internal event nor the external event shall be understood as being restricted to this for different events only, but may instead also include additional events.

In more detail, in step S01 the processor 350 of debug device 300 determines that an internal event has occurred. The processor 350 performs this determination on the basis of the real sensor data and/or the raw sensor data which have previously been received via the first interface 310 and/or second interface 320, respectively. When the determined internal event corresponds to one of the normal event, debug event, reconfig event, or update event, then the processor 350 proceeds with performing an according operation, as discussed in further detail below.

In an exemplary implementation, the processor 350 of the debug device 300 determines internally that an debug event has occurred, when the received real sensor data and/or raw sensor data exceed pre-configured reporting thresholds, and the processor 350 determines internally that a normal event has occurred, when the received real sensor data and/or raw sensor data do not exceed the pre-configured reporting thresholds for a predetermined amount of time (e.g. for 1 day, for 1 week, or for 1 month).

In another exemplary implementation, which can be combined with the above, the processor 350 of the debug device 300 determines internally that a debug event has occurred, when during health tracking the processor determines that the sensor device 200 is operating under un-healthy conditions, and the process 350 determines internally that a normal event has occurred, when during health tracking the processor determines that the sensor device is operating under healthy conditions for a predetermined amount of time (e.g. for 1 day, for 1 week, or for 1 month). For further details on the health tracking operation of the process 350, reference is made to steps S13-b, S19-a and S24-a in the description below.

In step S02, the processor 350 of debug device 300 receives an external event. The processor 350 receives the external event via the fourth interface 240 from the remote server 600. In this respect, the remote server 600 may automatically or manually, in response to a user control, control the operation of the debug device 300 by transmitting an external event as part of a data communication to the debug device 300. When the received external event corresponds to one of the normal event, debug event, reconfig event, or update event, then the processor 350 proceeds with performing an according operation, as discussed in further detail below.

Notably, the processor 350 performs the determination operation in step S01 in parallel (i.e. parallel processing) with the reception operation in step S02 such that no precedence is given to either one of the operation. In other words, both the internal event and the external event are treated equally by the processor 350 and equally determine the further operation of the debug device 300.

In step S03, the processor 350 of the debug device 300 checks whether the internal event or the external event is a reconfig event (short form of: reconfiguration event). If S03 is positive, the operation of the processor 350 proceeds with step S07. If S03 is negative, the processor 350 proceeds with checking whether the internal event or the external event is a debug event in step S04.

In case of a reconfig event, the processor 350 proceeds with determining in step S07 the internal state of the sensor device 200. Depending on the implementation, the processor 350 of the debug device 300 can be configured to determine the current internal state in a direct or indirect manner. As discussed above, the internal state of the sensor device 200 is at least one of a normal state, a debug state and a reconfig state.

In one exemplary implementation, the processor 350 determines the current internal state directly from the raw sensor data received via the second interface 320. In this implementation, the raw sensor data include explicit information which indicates the current internal state of the sensor device 200.

In an alternative exemplary embodiment, the processor 350 determines the internal state indirectly from the sensor data received via the first and second interfaces 310 and 320. From the mere presence (or absence) of real sensor data and/or raw sensor data for reception via the respective interfaces 310, 320, the processor 350 determines indirectly the current internal state of the sensor device 200. Notably, in this implementation, neither one of the real and raw sensor data contains explicit information which indicates the current internal state of the sensor device 200.

In another alternative exemplary implementation, the processor 350 determines the pre-defined internal state indirectly from the control history of the sensor device 200, i.e. from the previous internal states which it has been controlled (i.e. set) to be in. In this respect, the processor 350 of the debug device 300 determines the internal state of the sensor device 200 indirectly as being that one of the pre-defined states which the processor 350 has been most recently controlled it to assume.

Then, the processor 350 checks in step S08 whether or not the determined internal state of the sensor device 200 is not in the reconfig state (the expression "!=" is the short form of not or unequal).

If S08 is negative (i.e. the reconfig state is determined), the processor 350 proceeds to detect, in step S09, (or wait for) the termination of the corresponding reconfig operation within the debug device 300. This step S09 is implemented for safety reasons. Particularly, due to the processor 350 postponing further operations until termination of the reconfig operation, unintended interruptions of reconfiguration of the sensor device 200 are prevented. Further, after termination of the reconfig operation, the sensor device 200 also (automatically) assumes the normal state.

Conversely, if S08 is positive (i.e. the reconfig state is not determined), the processor 350 in step S10 retrieves previously logged raw sensor data and/or real sensor data available at the debug device 300. In an exemplary implementation, the raw sensor data and/or the real sensor data have previously been logged by way of storing same in memory 360. In this implementation, the processor 350 browses the memory 360 in order to retrieve from this memory 360 previously logged real sensor data and/or raw sensor data.

In step S11, the processor 350 checks whether or not the previously logged real sensor data and/or raw sensor data are sufficiently new. For this purpose, the processor 350 compares the time which has elapsed since previous logging the real sensor data and/or raw sensor data to a predetermine threshold (e.g. not older than 1 minute, 1 hour or 1 day). This step S11 ensures that the processor 350 can generate virtual sensor data from the previously logged real sensor data and/or raw sensor data, and can on this basis simulate the function of the sensor device 200.

If S11 is negative, the processor 350 aborts the reconfiguration of the sensor device 200 since a seamless transition to the simulation of the function of the sensor device 200 cannot be guaranteed. Conversely, if S11 is positive, the processor 350 proceeds with step S12.

In step S12, the debug device 300 controls (i.e. sets) the internal state of the sensor device 200 to assume the reconfig state.

Thereafter, the processor 350 performs the reconfig operation. This reconfig operation includes at least three different tasks that are performed by the processor 350 in parallel (i.e. parallel processing). Firstly, as part of the reconfig operation, the processor 350 updates the sensor device 200 in step S13-a. Secondly, as part of the same reconfig operation, the processor 350 performs health tracking of the sensor device 200 in step S13-b. Thirdly, as part of the reconfig operation, the processor 350 generates virtual sensor data, in step S13-c, in order to simulate the function of the sensor device 200. All this three tasks are performed in parallel by the processor 350 of the debug device 300, for instance, by using a parallel processing mechanism.

In more detail, in step S13-a, the processor 350 of debug device 300 updates the sensor device 200. For this purpose, the processor 350 performs at least one of the following operations, including updating the firmware of the sensor device, recalibrating the sensor device, and reconfiguring reporting thresholds in the sensor device 200. All of the three operations involve different types of software related to the function of the sensor device 200. Further, for the update the processor 350 downloads same software to the sensor device 200 as part of the data connection between the second interfaces 320 and 220.

The term "firmware" shall be understood, in the context of the invention, as the operating software of the sensor device 200. In other words, this firmware defines the core functionality of the sensor device 200 (e.g. the output routines), and may be updated in order to correct errors or enhance the functionality of the sensor device 200.

The term "recalibration software" shall be understood, in the context of the invention, as software of the sensor device 200 which is responsible for filtering of the sensed input signal or mapping thereof into a pre-configured measurement range. Thereby, the values which are transmitted by the sensor device 200 as real sensor data are recalibrated. This recalibration software may be updated in order to improve the precision of the filtering or mapping of the sensed input signal within the field trial testing environment.

Finally, the term "reporting thresholds" shall be understood, in the context of the invention, as software defining the conditions when (in case of periodic reporting) and for what value (in case of a-periodic reporting) the reporting of real sensor data and/or raw sensor data is effected by the sensor device. In other words, this software determines under which conditions the sensor device transmits the real sensor data and/or raw sensor data. Such software may be updated in order to further adapt the function of the sensor device 200 to the field testing environment.

In further detail, in step S13-b the processor 350 of debug device 300 performs health tracking of the sensor device 200. For this purpose, the debug device 300 performs at least one of the following operations, including a rationality diagnostic operation on the (presently available, or previously logged) real sensor data and/or the raw sensor data, and a functionality diagnostics operation of the sensor device 200. Both operations are performed by the processor 350 of the debug device 300 without any specific interaction with the sensor device 200. Moreover, the health tracking operation solely relies on sensor data readily available at the debug device 350.

Even further, in step S13-c the processor 350 of the debug device generates virtual sensor data. For this purpose, the processor 350 uses the previously logged real sensor data and/or raw sensor data which are determined in step S11 to be sufficiently new. Based on this previously logged real sensor data and/or raw sensor data, the processor 350 generates the virtual sensor data and transmits same via the third interface 230 (i.e. instead of the real sensor data) to the sensor network 400, namely to simulate the function of the sensor device 200.

In an exemplary implementation, the virtual sensor data are generated by the processor 350 on the basis of previously logged real sensor data. For this purpose, the processor 350 repeatedly transmits, for the entire duration of the reconfig operation, the most recent version or an average version of plural most recent of the (actually) logged real sensor data. Thereby, a seamless transition can be guaranteed at least from the real sensor data to the virtual sensor data, i.e. where for the latter the function of the sensor device 200 is simulated by the processor 350.

In an alternative exemplary implementation, the virtual sensor data are generated by the processor 350 on the basis of previously logged raw sensor data. For this purpose, the processor 350 repeatedly generates and transmits, for the entire duration of the reconfig operation, virtual sensor data in the same format of real sensor data. Specifically, the processor 350 of the debug device 300, instead of the sensor device 200, performs a filtering on the previously logged raw sensor data, and performs a mapping thereof into the preconfigured measurement range. Also in this case, a seamless transition can be guaranteed at least from the real sensor data to the virtual sensor data, i.e. where for the latter the function of the sensor device 200 is simulated by the processor 350.

After completion of the reconfig operation, the sensor device 200 resumes in the normal state. Also the operation of the debug device 300 is started anew.

In step S04, the processor 350 of the debug device 300 checks whether the internal event or the external event is a debug event (short form of: debugging event). If S04 is positive, the operation of the processor 350 proceeds with step S14. If S04 is negative, the processor 350 proceeds with checking whether the internal event or the external event is a normal event in step S05.

In case of a debug event, the processor 350 proceeds with determining in step S14 the internal state of the sensor device 200. For further details on the determining operation by the processor 350, reference is made to the corresponding description of step S07.

Then, the processor 350 checks in step S15 whether or not the determined internal state of the sensor device 200 is not in the reconfig state (the expression "!=" is the short form of not or unequal). If S15 is negative (i.e. the reconfig state is determined), the processor 350 proceeds to detect, in step S16, (or wait for) the termination of the corresponding reconfig operation within the debug device 300. This step S15 is implemented for safety reasons.

Conversely, if S15 is positive (i.e. the reconfig state is not determined), the processor proceeds with step S17.

In step S17, the processor 350 establishes a data connection via the forth interface 340 with the remote server 600. Due to the fact that the remote server 600 is connected wirelessly to the debug device, the wireless data connection is re-established via the fourth interface 340 before the debug operation is started by processor 350. Thereby, the functioning of the data connection can be guaranteed for the debug operation even in case of previous connection failures.

If in step S18, the processor 350 detects that the wireless data connection is established (positive) between the debug device 300 and the remote server 600, then the processor 350 proceeds with step S19. Conversely, if in step S18 the wireless data connection is not established (negative), then the processor 350 retries establishing a data connection in step S17, optionally after the elapse of a predefined time interval and further optionally only for a predefined number of times.

In step S19, the processor 350 of the debug device 300 controls (i.e. sets) the internal state of the sensor device 200 to assume the debug state.

Thereafter, the processor 350 performs the debug operation. This debug operation includes at least three different tasks that are performed by the processor 350 in parallel (i.e. parallel processing). Firstly, as part of the debug operation, the processor performs health tracking of the sensor device 200 in step S20-a. Secondly, as part of the debug operation, the processor 350 performs data logging of the real sensor data and the raw sensor data in step S20-b. Thirdly, as part of the debug operation, the processor 350 transmits, in step S20-c, especially raw sensor data received from the sensor device 200 to the remoter server 600.

For conciseness reasons, reference is made for the health tracking operation in step S20-a to the corresponding description of step S13-b.

In more detail, in step S20-b the processor 350 performs data logging of the real sensor data and the raw sensor data respectively received from the sensor via the first interface 310 and the second interface 320. The processor 350 performs the logging operation, for each logging time instance, by storing the received real sensor data, the state of the sensor device 200, and the received raw sensor data in a memory 360.

As detailed above, in an exemplary embodiment, the debug device 300 comprises, for the purpose of logging of the real sensor data and raw sensor data, the memory 360. This memory 360 is preferably a non-volatile memory, configured for storing the received real sensor data and raw sensor data, together with the determined state of the sensor device 200, in a first-in /first-out, FIFO data structure of a predefined size. In this respect, only the most recent sensor data is stored in the memory of the debug device 300, thereby facilitating a long-term debugging of the sensor outputs. Exemplarily, the predefined size of the data structure in the memory contains at least 100, preferably at least 1000 sets of sensor data, each comprising the received real sensor data, the determined state of the sensor device, and, if available, the received raw sensor output.

In further detail, in step S20-c the processor 350 performs a transmit operation which particularly includes transmitting the raw sensor data, received via the second interface 320 from the sensor device 200, via the forth interface 340 to the remote server 600. As the second interface 320 is for wired data communication and the fourth interface 340 is for wireless communication, the processor 340 is required to (actively) perform intermediate data conversion. Additionally, the transmit operation includes that the processor 350 transmits real sensor data received via the first interface 310 from the sensor device 200 via the third interface 330 to the sensor network 400. In this latter case, the processor performs a (passive) forwarding operation (without data conversion) between the first interface 310 and the third interface 330 of the same type.

Advantageously, the fourth interface 340 of the debug device 300 facilitates a wireless data connection to the remote server 600. Thereby, the debug device 300, in corporation with the remote server 600, enables access to and debugging of the sensor device 200 at a remote location, hence, far away from where the sensor device is deployed. Further advantageously, due to the above definition of the debug operation, the debug device 300 is transparent to the data communication between the sensor device 200 and the sensor network 400 and/or network controller 500.

This debug operation is considered to be performed continually (i.e. endlessly) by the debug device 300, until an internal event is determined or an external event is receive, as described with regard to steps S01 an S02, respectively.

In step S05, the processor 350 of the debug device 300 checks whether the internal event or the external event is a normal event. If S05 is positive, the operation of the processor 350 proceeds with step S20. If S05 is negative, the processor 350 proceeds with checking whether the internal event or the external event is an update event in step S06.

In case of a normal event, the processor 350 proceeds with determining in step S21 the internal state of the sensor device 200. For further details on the determining operation by the processor 350, reference is made to the corresponding description of step S07.

Then, the processor 350 checks in step S22 whether or not the determined internal state of the sensor device 200 is not in the reconfig state (the expression "!=" is the short form of not or unequal). If S22 is negative (i.e. the reconfig state is determined), the processor 350 proceeds to detect, in step S23, (or wait for) the termination of the corresponding reconfig operation within the debug device 300. This step S22 is implemented for safety reasons.

Conversely, if S22 is positive (i.e. the reconfig state is not determined), the processor 350 proceeds with step S24.

In step S24, the processor 350 of the debug device 300 controls (i.e. sets) the internal state of the sensor device 200 to assume the normal state.

Thereafter, the processor 350 performs the normal operation. This normal operation includes at least three different tasks that are performed by the processor in parallel (i.e. parallel processing). Firstly, as part of the normal operation, the processor 350 performs health tracking of the sensor device in step S25-a. Secondly, as part of the normal operation, the processor 350 performs data logging of the received real sensor data output in step S25-b. Thirdly, as part of the normal operation, the processor transmits, in step S25-c, real sensor data to the sensor network 400.

For conciseness reasons, reference is made for the health tracking operation in step S25-a to the corresponding description of step S13-b.

In more detail, in step S25-b, the processor 350 performs data logging of the real sensor data received via the first interface 310. The processor 350 performs the logging operation, for each logging time instance, by storing the received real sensor data, and the state of the sensor device 200, in a memory 360.

In further detail, in step S25-c, the processor 350 transmits real sensor data received via the first interface 310 from the sensor device 320 via the third interface 330 to the sensor network 400. In this latter case, the processor performs a (passive) forwarding operation (without data conversion) between the first interface 310 and the third interface 330 of the same type.

Advantageously, due to this definition of the normal operation, the debug device 300 is transparent to the data communication between the sensor device 200 and the sensor network 400 and/or network controller 500.

Further advantageously, the processor 350 may be configured to automatically active the filtering in the third interface 330 during normal operation, namely in that the third interface 330 of the debug device 300 filters out all data communication which is not directly for the sensor device 200 and/or the debug device 300. Thereby, the processor 350 only internally processes data (e.g. forwards data to the first interface 310) which is addressed for receipt by the sensor device 200 and/or to the debug device 300. Thereby, privacy concerns can be mitigated and the acceptance for a use of the system 100 in field trial test campaigns can be improved.

This normal operation is considered to be performed continually (i.e. endlessly) by the debug device 300, until an internal event is determined or an external event is receive, as described with regard to steps S01 an S02, respectively.

In step S06, the processor 350 of the debug device 300 checks whether the internal event or the external event is an update event. If S06 is positive, the update operation of the processor 350 proceeds with step S25. If S06 is negative, the processor 350 proceeds with checking whether the internal event or the external event is again reconfig event in step S03. In this case, it is assumed that the internal event or external event has not been correctly been identified at the first time by the processor 350.

In case of an update event, the processor 350 proceeds with determining in step S26 the internal state of the sensor device 200. For further details on the determining operation by the processor 350, reference is made to the corresponding description of step S07.

Then, the processor 350 checks in step S27 whether or not the determined internal state of the sensor device 200 is not in the reconfig state (the expression "!=" is the short form of not or unequal). If S27 is negative (i.e. the reconfig state is determined), the processor 350 proceeds to detect, in step S28, (or wait for) the termination of the corresponding update operation within the debug device 300. This step S27 is implemented for safety reasons.

Conversely, if S27 is positive (i.e. the reconfig state is not determined), the processor 350 proceeds with step S29.

In step S29, the processor 350 establishes a data connection via the forth interface 340 with the remote server 600. Due to the fact that the remote server 600 is connected wirelessly to the debug device, the wireless data connection is re-established via the fourth interface 340 before the update operation is started by processor 350. Thereby, the functioning of the data connection can be guaranteed even in case of intermediate connection failures.

If in step S30, the processor 350 detects that the wireless data connection is established (positive) between the debug device 300 and the remote server 600, then the processor 350 proceeds with step S19. Conversely, if in step S30 the wireless data connection is not established (negative), then the processor 350 retries establishing a data connection in step S29, optionally after the elapse of a predefined time interval and further optionally only for a predefined number of times.

In step S31, the processor 350 downloads via the fourth interface 340 from the remote server 600 updated libraries to the memory 360 of the debug device 300. After the successful download of the libraries, the processor 350 updates, i.e. replaces existing libraries with the updated libraries from the remote server 600.

In more detail, in step S31 the functionality of the debug device 300 is updated through libraries from the remote server 600. These libraries shall be understood, in the context of the invention, as software of the debug device 300 which responsible for filtering of the sensed input signal or mapping thereof into a pre-configured measurement range. In other words, the libraries enable the subsequent processing of raw sensor data, namely provide the software necessary for a sensor specific interpretation thereof.

In response to the update operation, the generation of virtual sensor data is recalibrated for the next time when the debug device 300 generates same from the raw sensor data during the reconfiguration operation. These libraries may be updated in order to improve the precision of the filtering or mapping of the sensed input signal within the field trial testing environment.

### References:

| | |
|---|---|
| 100 | debug system |
| 200 | sensor device |
| 210 | first interface |
| 220 | second interface |
| 300 | debug device |
| 310 | first interface |
| 320 | second interface |
| 330 | third interface |
| 340 | fourth interface |
| 350 | processor |
| 360 | memory |
| 400 | sensor network |
| 500 | network controller |
| 510 | first interface |
| 600 | remote server |
| 610 | first interface |
| 620 | processor |
| 630 | memory |

## Claims

1. A debug device (300) for debugging, in cooperation with a remote server (600), an output of a sensor device (200) within a sensor network (400), comprising:
at least one first wired interface (310, 320) configured to establish a data connection to the sensor device (200) for receiving real sensor data to be output by a sensor device (200) in a normal state and in a debug state and raw sensor data to be output by a sensor device (200) in the debug state;
a second wired interface (330) configured to establish a data connection to the sensor network (400) for transmitting received real sensor data;
a third wireless interface (340) configured to establish a data connection to the remote server (600) for transmitting received raw sensor data; and
a processor (350) configured to set an internal state of the sensor device (200), including at least one of the normal state and the debug state; and
when the sensor device (200) is set to be in the normal state, the processor is configured to perform a normal operation, including:
- receiving the real sensor data via the at least one first wired interface (310), logging same within the debug device (300), and transmitting same via the second wired interface (330); and
when the sensor device (200) is set to be in the debug state, the processor is configured to perform a debug operation, including:
- receiving the real sensor data via the at least one first wired interface (310), logging same within the debug device (300), and transmitting same via the second wired interface (330), and
- receiving the raw sensor data via the at least one first wired interface (320), logging same within the debug device (300), and transmitting same, at least in part, via the third wireless interface (340).

2. The debug device according to claim 1, wherein the at least one first wired interface includes:
one dedicated interface (310) for establishing the data connection with the sensor device (200) to receive the real sensor data, and another dedicated interface (320) for establishing the data connection with the sensor device (200) to separately receive the raw sensor data, and optionally,
wherein the one dedicated interface (320) utilizes a same interface standard as the second wired interface (330) and/or the other dedicate interface (320) utilizes a different interface standard as the third wireless interface (340)

3. The debug device according to claim 1 or 2,
wherein the at least one first wired interface (310, 320) includes:
at least one of a Controller Area Network, CAN, bus interface, a Local Interconnect Network, LIN, bus interface, and a Single Edge Nibble Transmission, SENT, interface configured to establish a data connection with the sensor device to receive the real sensor data; and/or
at least one of a General Purpose Input/output, GPIO, interface, a Inter-Integrated Circuit, I2C, bus interface, a Joint Test Action Group, JTAG, interface configured to establish another data connection with the sensor device to receive the raw sensor data;
and/or wherein the second wired interface (330) includes:
at least one of a Controller Area Network, CAN, bus interface, a Local Interconnect Network, LIN, bus interface, and a Single Edge Nibble Transmission, SENT, interface configured to establish a data connection with the sensor network for transmitting the real sensor data;
and/or wherein the third wireless interface (340) includes:
at least one of a Global System for Mobile Communications, GSM, interface, a Universal Mobile Telecommunications System, UMTS, interface, a Long Term Evolution, LTE, interface, and a Long Range, LoRa, Wide Area Network, WAN, interface configured to establish a data connection with the remote server for transmitting at least parts of the raw sensor data.

4. The debug device according to one of claims 1 to 4, wherein, when the sensor device (200) is set to be in the normal state or in the debug state,
the processor (350) is configured to perform the logging operation, for each logging time instance, by storing the received real sensor data, the set state of the sensor device, and, if available, the received raw sensor data.

5. The debug device according to one of claims 1 to 4, further comprising a memory (360), preferably a non-volatile memory,
wherein the memory (360) is configured for storing, in response to the logging operation of the processor, the received real sensor data and/or raw sensor data in a first-in /first-out, FIFO, data structure of a predefined size.

6. The debug device according to one of claims 1 to 5, wherein, when the sensor device (200) is set to be in the debug state,
the processor (350) is configured to transmit, at a pre-configured transmit ratio, the received raw sensor data via the third wireless interface, where the transmit ratio is pre-configured preferably to be 1/10, and more preferably to be 1/100 of the logging operation of the real sensor data and/or the raw sensor data.

7. The debug device according to one of claims 1 to 6, wherein, before the sensor device (200) is set to be in the debug state, the processor (350) is configured to establish the data connection to the remote server (600).

8. The debug device according to one of claims 1 to 7, wherein, when the sensor device is set to be in a reconfig state,
the processor (350) is configured to perform a reconfig operation, including at least one of updating the firmware of the sensor device, recalibrating the sensor device, and reconfiguring reporting thresholds in the sensor device via the at least one first wired interface (220) to the sensor device (200), and
the processor is further configured to generate virtual sensor data based on previously logged sensor data from the sensor device (200), and to transmit same virtual sensor data via the second wire interface (330) to the sensor network (400).

9. The debug device according to claim 8, wherein
the processor (350) is further configured determine the internal state of the sensor device, and thereafter the processor only sets the sensor device (350) to be in the normal state, the debug state, or the reconfig state
- when the processor (350) determines that the sensor device is not in the reconfig state, or
- when the processor (350) determines that the sensor device is in the reconfig state, and when the processor additionally detects that the reconfig operation has terminated.

10. The debug device according to one of claims 1 to 9, wherein when the sensor device (200) is set to be in the normal state, in the debug state, or in the reconfig state,
the processor (350) is configured to further perform a health tracking operation including at least one of
- a rationality diagnostic operation on the real sensor data and/or the raw sensor data, if available, and
- a functionality diagnostic operation of the sensor device (200).

11. The debug device according to one of claims 1 to 10, wherein the processor (350) is further configured to receive, via the third wireless interface (340), an external even or configure to determine, from the received real sensor data and/or raw sensor data, an internal event,
where the internal trigger event and the external trigger even, respectively, include at least one of a normal event, a debug event, and a reconfig event; and
in accordance with the received external even or the determined internal event, the processor (350) is configured to perform a corresponding operation including setting the sensor device (200) to the normal state, the debug state and the reconfig state, respectively.

12. The debug device according to claim 11, wherein
the processor (350) is configured to determine, when the received real sensor data and/or raw sensor data exceed pre-configured reporting thresholds, an internal event corresponding to the debug event; and/or
the processor (350) is configure to determine, when the received real sensor data and/or raw sensor data do not exceed the pre-configured reporting thresholds for predetermined amount of time, an internal event corresponding to the normal event.

13. The debug device according to claim 11 or 12, wherein
the processor (350) is configured to establish, via the third interface (340), a data connection to the remote server and to download as part of this data connection updated libraries for the debug device (300), after the debug device receives, via the third wireless interface, an external event corresponding to an update event.

14. The debug device according to one of claims 1 to 13, wherein
the second wired interface (330) is configured to filter out all data communication which is not addressed to the sensor device (200) and/or the debug device (300), and optionally,
the processor (350) configured to activate the filtering by the second wired interface (330) when the sensor device (200) is set to be in the normal state.

15. A debug system comprising a debug device according to one of claims 1 to 13, and a remote server (600),
wherein the remote server (600) comprises a first interface (610) configured to establish a data connection to the debug device (300) for receiving raw sensor data.

16. The debug system according to claim 15, further comprising:
a memory (630) for storing the raw sensor data received via the first interface (610); and
a processor (620) configured to perform statistical validation operations on the stored raw sensor data, and to upload update libraries to the debug device (300) via the first interface (610).

## Patentansprüche

1. Fehlerbehebungsvorrichtung (300) zur Fehlerbehebung an einer Ausgabe einer Sensorvorrichtung (200) in einem Sensornetzwerk (400) in Zusammenarbeit mit einem Remoteserver (600), umfassend:
wenigstens eine zum Herstellen einer Datenverbindung mit der Sensorvorrichtung (200) zum Empfangen von realen Sensordaten zur Ausgabe durch eine Sensorvorrichtung (200) in einem normalen Zustand und in einem Fehlerbehebungszustand und Rohsensordaten zur Ausgabe durch eine Sensorvorrichtung (200) im Fehlerbehebungszustand ausgebildete erste verdrahtete Schnittstelle (310, 320);
eine zum Herstellen einer Datenverbindung mit dem Sensornetzwerk (400) zum Senden von empfangenen realen Sensordaten ausgebildete zweite verdrahtete Schnittstelle (330);
eine zum Herstellen einer Datenverbindung mit dem Remoteserver (600) zum Senden von empfangenen Rohsensordaten ausgebildete dritte drahtlose Schnittstelle (340); und
einen zum Festlegen eines internen Zustands der Sensorvorrichtung (200) ausgebildeten Prozessor (350),
umfassend den normalen Zustand oder/und den Fehlerbehebungszustand; und
wenn die Sensorvorrichtung (200) als im normalen Zustand befindlich festgelegt ist, der Prozessor zum Ausführen eines normalen Betriebs ausgebildet ist, umfassend:
- Empfangen der realen Sensordaten über die wenigstens eine erste verdrahtete Schnittstelle (310), Protokollieren von diesen in der Fehlerbehebungsvorrichtung (300) und Senden von diesen über die zweite verdrahtete Schnittstelle (330); und
wenn die Sensorvorrichtung (200) als im Fehlerbehebungszustand befindlich festgelegt ist, der Prozessor zum Ausführen eines Fehlerbehebungsbetriebs ausgebildet ist, umfassend:
- Empfangen der realen Sensordaten über die wenigstens eine erste verdrahtete Schnittstelle (310), Protokollieren von diesen in der Fehlerbehebungsvorrichtung (300) und Senden von diesen über die zweite verdrahtete Schnittstelle (330), und
Empfangen der Rohsensordaten über die wenigstens eine erste verdrahtete Schnittstelle (320), Protokollieren von diesen in der Fehlerbehebungsvorrichtung (300) und Senden von diesen wenigstens teilweise über die dritte drahtlose Schnittstelle (340).

2. Fehlerbehebungsvorrichtung nach Anspruch 1, wobei die wenigstens eine erste verdrahtete Schnittstelle umfasst:
eine dedizierte Schnittstelle (310) zum Herstellen der Datenverbindung mit der Sensorvorrichtung (200) zum Empfangen der realen Sensordaten und eine weitere dedizierte Schnittstelle (320) zum Herstellen der Datenverbindung mit der Sensorvorrichtung (200) zum separaten Empfangen der Rohsensordaten, und optional
wobei die eine dedizierte Schnittstelle (320) einen gleichen Schnittstellenstandard verwendet wie die zweite verdrahtete Schnittstelle (330) und/oder die andere dedizierte Schnittstelle (320) einen anderen Schnittstellenstandard wie die dritte drahtlose Schnittstelle (340) verwendet.

3. Fehlerbehebungsvorrichtung nach Anspruch 1 oder 2,
wobei die wenigstens eine erste verdrahtete Schnittstelle (310, 320) umfasst:
wenigstens ein Element der Gruppe umfassend eine Controller-Area-Network-(CAN-)Bus-schnittstelle, eine Local-lnterconnect-Network-(LIN-)Busschnittstelle und eine Single-Edge-Nibble-Transmission-(SENT-)Schnittstelle, ausgebildet zum Herstellen einer Datenverbindung mit der Sensorvorrichtung zum Empfangen der realen Sensordaten; und/oder wenigstens ein Element der Gruppe umfassend eine General-Purpose-Input/Output-(GPIO-)Schnittstelle, eine Inter-Integrated-Circuit-(I2C-)Busschnittstelle und eine Joint-Test-Action-Group-(JTAG-)Schnittstelle, ausgebildet zum Herstellen einer weiteren Datenverbindung mit der Sensorvorrichtung zum Empfangen der Rohsensordaten;
und/oder wobei die zweite verdrahtete Schnittstelle (330) umfasst:
wenigstens ein Element der Gruppe umfassend eine Controller-Area-Network-(CAN-)Bus-schnittstelle, eine Local-Interconnect-Network-(LIN-)Busschnittstelle und eine Single-Edge-Nibble-Transmission-(SENT-)Schnittstelle, ausgebildet zum Herstellen einer Datenverbindung mit dem Sensornetzwerk zum Senden der realen Sensordaten;
und/oder wobei die dritte drahtlose Schnittstelle (340) umfasst:
wenigstens ein Element der Gruppe umfassend eine Global-System-for-Mobile-Communications-(GSM-)Schnittstelle, eine Universal-Mobile-Telecommunications-System-(UMTS-)Schnittstelle, eine Long-Term-Evolution-(LTE-)Schnittstelle und eine Long-Range-(LoRa-)Wide-Area-Network-(WAN-)Schnittstelle, ausgebildet zum Herstellen einer Datenverbindung mit dem Remoteserver zum Senden von wenigstens Teilen der Rohsensordaten.

4. Fehlerbehebungsvorrichtung nach einem der Ansprüche 1 bis 4, wobei, wenn die Sensorvorrichtung (200) als im normalen Zustand oder im Fehlerbehebungszustand befindlich festgelegt ist,
der Prozessor (350) zum Ausführen des Protokollierungsbetriebs für jede Protokollierzeitinstanz durch Speichern der empfangenen realen Sensordaten, des festgelegten Zustands der Sensorvorrichtung und, falls verfügbar, der empfangenen Rohsensordaten ausgebildet ist.

5. Fehlerbehebungsvorrichtung nach einem der Ansprüche 1 bis 4, ferner umfassend einen Speicher (360), vorzugsweise einen nichtflüchtigen Speicher,
wobei der Speicher (360) zum Speicher der empfangenen realen Sensordaten und/oder Rohsensordaten in einer First-In-/First-Out-(FIFO-)Datenstruktur einer vordefinierten Größe als Reaktion auf den Protokollierungsbetrieb des Prozessors ausgebildet ist.

6. Fehlerbehebungsvorrichtung nach einem der Ansprüche 1 bis 5, wobei, wenn die Sensorvorrichtung (200) als im Fehlerbehebungszustand befindlich festgelegt ist,
der Prozessor (350) zum Senden der empfangenen Rohsensordaten über die dritte drahtlose Schnittstelle mit einem vorkonfigurierten Sendeverhältnis ausgebildet ist, wobei das Sendeverhältnis vorzugsweise mit 1/10 und noch besser mit 1/100 des Protokollierungsbetriebs der realen Sensordaten und/oder Rohsensordaten vorkonfiguriert ist.

7. Fehlerbehebungsvorrichtung nach einem der Ansprüche 1 bis 6, wobei, bevor die Sensorvorrichtung (200) als im Fehlerbehebungszustand befindlich festgelegt wird, der Prozessor (350) zum Herstellen der Datenverbindung mit dem Remoteserver (600) ausgebildet ist.

8. Fehlerbehebungsvorrichtung nach einem der Ansprüche 1 bis 7, wobei, wenn die Sensorvorrichtung als in einem Umkonfigurierungszustand befindlich festgelegt ist,
der Prozessor (350) zum Durchführen eines Umkonfigurierungsbetriebs umfassend wenigstens ein Element der Gruppe umfassend das Aktualisieren der Firmware der Sensorvorrichtung, das Neukalibrieren der Sensorvorrichtung und das Umkonfigurieren von Meldeschwellen in der Sensorvorrichtung über die wenigstens eine erste verdrahtete Schnittstelle (220) an der Sensorvorrichtung (200) ausgebildet ist, und
der Prozessor zum Erzeugen von virtuellen Sensordaten auf der Basis von zuvor protokollierten Sensordaten von der Sensorvorrichtung (200) und zum Senden der gleichen virtuellen Sensordaten über die zweite verdrahtete Schnittstelle (330) an das Sensornetzwerk (400) ausgebildet ist.

9. Fehlerbehebungsvorrichtung nach Anspruch 8, wobei
der Prozessor (350) ferner zum Bestimmen des internen Zustands der Sensorvorrichtung ausgebildet ist, und anschließend der Prozessor ausschließlich die Sensorvorrichtung (350) als im normalen Zustand, Fehlerbehebungszustand oder Umkonfigurierungszustand befindlich festlegt
- wenn der Prozessor (350) bestimmt, dass sich die Sensorvorrichtung nicht im Umkonfigurierungszustand befindet, oder
- wenn der Prozessor (350) bestimmt, dass sich die Sensorvorrichtung im Umkonfigurierungszustand befindet, und wenn der Prozessor zusätzlich erfasst, dass der Umkonfigurierungsbetrieb beendet wurde.

10. Fehlerbehebungsvorrichtung nach einem der Ansprüche 1 bis 9, wobei, wenn die Sensorvorrichtung (200) als im normalen Zustand, im Fehlerbehebungszustand oder im Umkonfigurierungszustand befindlich festgelegt ist,
der Prozessor (350) ferner zum Durchführen eines Integritätsverfolgungsbetriebs ausgebildet ist, umfassend wenigstens ein Element der Gruppe umfassend
- einen Rationalitätsdiagnosebetrieb an den realen Sensordaten und/oder Rohsensordaten, falls verfügbar, und
- einen Funktionalitätsdiagnosebetrieb der Sensorvorrichtung (200).

11. Fehlerbehebungsvorrichtung nach einem der Ansprüche 1 bis 10, wobei der Prozessor (350) ferner zum Empfangen eines externen Ereignisses über die dritte drahtlose Schnittstelle (340) oder zum Bestimmen eines internen Ereignisses aus den empfangenen realen Sensordaten und/oder Rohsensordaten ausgebildet ist,
wobei das interne Auslöseereignis und das externe Auslöseereignis jeweils wenigstens ein Element der Gruppe umfassend ein normales Ereignis, ein Fehlerbehebungsereignis und ein Umkonfigurierungsereignis umfassen; und
entsprechend dem empfangenen externen Ereignis oder dem bestimmten internen Ereignis der Prozessor (350) zum Durchführen eines entsprechenden Betriebs umfassend das Festlegen der Sensorvorrichtung (200) auf jeweils den normalen Zustand, den Fehlerbehebungszustand und den Umkonfigurierungszustand ausgebildet ist.

12. Fehlerbehebungsvorrichtung nach Anspruch 11, wobei
der Prozessor (350) zum Bestimmen eines internen Ereignisses entsprechend dem Fehlerbehebungsereignis, wenn die empfangenen realen Sensordaten und/oder Rohsensordaten die vorkonfigurierten Meldeschwellen überschreiten, ausgebildet ist; und/oder der Prozessor (350) zum Bestimmen eines internen Ereignisses entsprechend dem normalen Ereignis, wenn die empfangenen realen Sensordaten und/oder Rohsensordaten die vorkonfigurierten Meldeschwellen für eine vorbestimmte Zeitmenge nicht überschreiten, ausgebildet ist.

13. Fehlerbehebungsvorrichtung nach Anspruch 11 oder 12, wobei
der Prozessor (350) zum Herstellen einer Datenverbindung mit dem Remoteserver über die dritte Schnittstelle (340) und zum Herunterladen von aktualisierten Bibliotheken für die Fehlerbehebungsvorrichtung (300) als Teil dieser Datenverbindung, nachdem die Fehlerbehebungsvorrichtung über die dritte drahtlose Schnittstelle ein externes Ereignis entsprechend einem Aktualisierungsereignis empfängt, ausgebildet ist.

14. Fehlerbehebungsvorrichtung nach einem der Ansprüche 1 bis 13, wobei die zweite verdrahtete Schnittstelle (330) zum Herausfiltern der gesamten Datenkommunikation, die nicht an die Sensorvorrichtung (200) und/oder die Fehlerbehebungsvorrichtung (300) gerichtet ist, und optional,
der Prozessor (350) zum Aktivieren des Filterns durch die zweite verdrahtete Schnittstelle (330), wenn die Sensorvorrichtung (200) als im normalen Zustand befindlich festgelegt ist, ausgebildet ist.

15. Fehlerbehebungssystem umfassend eine Fehlerbehebungsvorrichtung nach einem der Ansprüche 1 bis 13 und einen Remoteserver (600),
wobei der Remoteserver (600) eine zum Herstellen einer Datenverbindung mit der Fehlerbehebungsvorrichtung (300) zum Empfangen von Rohsensordaten ausgebildete erste Schnittstelle (610) umfasst.

16. Fehlerbehebungssystem nach Anspruch 15, ferner umfassend:
einen Speicher (630) zum Speichern der über die erste Schnittstelle (610) empfangenen Rohsensordaten; und
einen zum Durchführen von statistischen Validierungsoperationen an den gespeicherten Rohsensordaten und zum Hochladen von Aktualisierungsbibliotheken zur Fehlerbehebungsvorrichtung (300) über die erste Schnittstelle (610) ausgebildeten Prozessor (620).

## Revendications

1. Dispositif de débogage (300) destiné à déboguer, en coopération avec un serveur distant (600), une sortie de capteur (200) dans un réseau de capteurs (400), comprenant :
au moins une première interface câblée (310, 300) configurée pour établir une connexion de données avec le capteur (200) afin de recevoir des données réelles de capteur à délivrer par un capteur (200) à l'état normal et lors d'un débogage et des données brutes de capteur à délivrer par un capteur (200) lors d'un débogage,
une deuxième interface câblée (330) configurée pour établir une connexion de données avec le réseau de capteurs (400) afin de transmettre les données réelles de capteur reçues,
une troisième interface sans fil (340) configurée pour établir une connexion de données avec le serveur distant (600) afin de transmettre les données brutes de capteur reçues, et
un processeur (350) configuré pour positionner l'état interne du capteur (200) comprenant au moins l'un de l'état normal et de l'état de débogage, et
lorsque le capteur (200) est positionné pour se trouver à l'état normal, le processeur est configuré pour effectuer une opération normale comprenant :
- la réception des données réelles de capteur par l'intermédiaire de la ou des premières interfaces câblées (310), la consignation de celles-ci à l'intérieur du dispositif de débogage (300) et la transmission de celles-ci par l'intermédiaire de la deuxième interface câblée (330), et
lorsque le capteur (200) est positionné pour se trouver à l'état de débogage, le processeur est configuré pour effectuer une opération de débogage comprenant :
- la réception des données réelles de capteur par l'intermédiaire de la ou des premières interfaces câblées (310), la consignation de celle-ci à l'intérieur du dispositif de débogage (300) et la transmission de celles-ci par l'intermédiaire de la deuxième interface câblée (330), et
- la réception des données brutes de capteur par l'intermédiaire de la ou des premières interfaces câblées (320), la consignation de celle-ci à l'intérieur du dispositif de débogage (300) et la transmission de celles-ci, au moins en partie, par l'intermédiaire de la troisième interface sans fil (340).

2. Dispositif de débogage selon la revendication 1, dans lequel la ou les premières interfaces câblées incluent :
une interface spécialisée (310) destinée à établir la connexion de données avec le capteur (200) pour recevoir les données réelles de capteur, et une autre interface spécialisée (320) destinée à établir la connexion de données avec le capteur (200) pour recevoir séparément les données brutes de capteur, et en option :
dans lequel la première interface spécialisée (320) utilise la même norme d'interface que la deuxième interface câblée (330) et/ou dans lequel l'autre interface spécialisée (320) utilise une norme d'interface différente que la troisième interface sans fil (340).

3. Dispositif de débogage selon la revendication 1 ou la revendication 2,
dans lequel la ou les premières interfaces câblées (310, 320) incluent :
au moins l'une d'une interface de bus de réseau de zone de contrôleur, CAN, d'une interface de bus de réseau d'interconnexion locale, LIN, et d'une interface de transmission unilatérale de quartets, SENT, configurée pour établir une connexion de données avec le capteur pour recevoir les données réelles de capteur, et/ou
au moins l'une d'une interface d'entrée/sortie universelle, GPIO, d'une interface de bus inter circuits intégrés, I2C, d'une interface du groupe mixte d'action pour les tests, JTAG, configurée pour établir une autre connexion de données avec le capteur pour recevoir les données brutes de capteur,
et/ou dans lequel la deuxième interface câblée (330) inclut :
au moins l'une d'une interface de bus de réseau de zone de contrôleur, CAN, d'une interface de bus de réseau d'interconnexion locale, LIN, et d'une interface de transmission unilatérale de quartets, SENT, configurée pour établir une connexion de données avec le réseau de capteur pour transmettre les données réelles de capteur,
et/ou la troisième interface sans fil (340) inclut :
au moins l'une d'une interface du système global de communications mobiles, GSM, d'une interface du système universel de télécommunications mobiles, UMTS, d'une interface de l'évolution à long terme, LTE et d'une interface de réseau longue distance, WAN, longue portée, LoRa, configurée pour établir une connexion de données avec le serveur distant dans le but de transmettre au moins des parties des données brutes de capteur.

4. Dispositif de débogage selon l'une des revendications 1 à 3, dans lequel, lorsque le capteur (200) est positionné pour se trouver dans l'état normal ou dans l'état de débogage,
le processeur (350) est configuré pour effectuer une opération de consignation, pour chaque instance de temps de consignation, en stockant les données réelles de capteur reçues, l'état défini du capteur et, si disponibles, les données brutes de capteur reçues.

5. Dispositif de débogage selon l'une des revendications 1 à 4, comprenant en outre une mémoire (360) de préférence une mémoire non volatile,
dans lequel la mémoire (360) est configurée pour stocker, en réponse à l'opération de consignation du processeur, les données réelles de capteur reçues et/ou les données brutes de capteur dans une structure de données premier entré / premier sorti, FIFO, d'une taille prédéfinie.

6. Dispositif de débogage selon l'une des revendications 1 à 5, dans lequel, lorsque le capteur (200) est positionné pour se trouver dans l'état de débogage,
le processeur (350) est configuré pour transmettre, à un taux de transmission préconfiguré, les données brutes de capteur reçues par l'intermédiaire de la troisième interface, le taux de transmission étant préconfiguré de préférence pour valoir 1/10 et plus préférablement pour valoir 1/100 de l'opération de consignation des données réelles de capteur et/ou des données brutes de capteur.

7. Dispositif de débogage selon l'une des revendications 1 à 6, dans lequel, avant que le capteur (200) soit positionné pour se trouver dans l'état de débogage, le processeur (350) est configuré pour établir la connexion de données avec le serveur distant (600).

8. Dispositif de débogage selon l'une des revendications 1 à 7, dans lequel, lorsque le capteur est positionné pour se trouver dans un état de reconfiguration,
le processeur (350) est configuré pour effectuer une opération de reconfiguration incluant au moins une opération parmi une mise à jour du logiciel microprogrammé du capteur, un réétalonnage du capteur et une reconfiguration de seuils de rapport dans le capteur par l'intermédiaire de la ou des premières interfaces câblées (310) vers le capteur (200), et
le processeur est en outre configuré pour générer des données virtuelles de capteur fondées sur des données précédemment consignées de capteur issues du capteur (200), ainsi que pour transmettre au réseau de capteurs (400) les mêmes données virtuelles de capteur par l'intermédiaire de la deuxième interface câblée (330).

9. Dispositif de débogage selon la revendication 8, dans lequel :
le processeur (350) est en outre configuré pour déterminer l'état interne du capteur et ensuite seulement le processeur positionne le capteur (200) pour qu'il se trouve dans l'état normal, dans l'état de débogage ou dans l'état de reconfiguration :
- lorsque le processeur (350) a déterminé que le capteur ne se trouve pas dans l'état de reconfiguration, ou
- lorsque le processeur (350) a déterminé que le capteur se trouve dans l'état de reconfiguration et lorsque le processeur a de plus détecté que l'opération de reconfiguration s'est achevée.

10. Dispositif de débogage selon l'une des revendications 1 à 9, dans lequel, lorsque le capteur (200) est positionné pour se trouver dans l'état normal, dans l'état de débogage ou dans l'état de reconfiguration,
le processeur (350) est configuré pour effectuer en outre une opération de suivi de santé incluant au moins l'une parmi :
- une opération de diagnostic de rationalité sur les données réelles de capteur et/ou sur les données brutes de capteur, si disponibles, et
- une opération de diagnostic de fonctionnalité du capteur (200).

11. Dispositif de débogage selon l'une des revendications 1 à 10, dans lequel le processeur (350) est en outre configuré pour recevoir, par l'intermédiaire de la troisième interface sans fil (340), un événement externe, ou bien il est configuré pour déterminer, à partir des données réelles de capteur reçues et/ou des données brutes de capteur, un événement interne,
dans lequel l'événement de déclenchement interne et l'événement de déclenchement externe incluent respectivement au moins l'un d'un événement normal, d'un événement de débogage et d'un événement de reconfiguration, et
en fonction de l'événement externe reçu ou de l'événement interne déterminé, le processeur (350) est configuré pour effectuer une opération correspondante incluant le positionnement du capteur (200) respectivement sur l'état normal, l'état de débogage et l'état de reconfiguration.

12. Dispositif de débogage selon la revendication 11, dans lequel :
le processeur (350) est configuré pour déterminer un événement interne correspondant à l'événement de débogage lorsque les données réelles de capteur reçues et/ou les données brutes de capteur dépassent des seuils de rapport préconfigurés, et/ou
le processeur (350) est configuré pour déterminer un événement interne correspondant à l'événement normal lorsque les données réelles de capteur reçues et/ou les données brutes de capteur ne dépassent pas les seuils de rapport préconfigurés pendant un intervalle de temps prédéterminé.

13. Dispositif de débogage selon la revendication 11 ou la revendication 12, dans lequel :
le processeur (350) est configuré pour établir, par l'intermédiaire de la troisième interface sans fil (340), une connexion de données avec le serveur distant et pour télécharger, dans le cadre de cette connexion de données, des bibliothèques à jour pour le dispositif de débogage (300) après que le dispositif de débogage a reçu, grâce à la troisième interface sans fil, un événement externe correspondant à un événement de mise à jour.

14. Dispositif de débogage selon l'une des revendications 1 à 13, dans lequel :
la deuxième interface câblée (330) est configurée pour filtrer toutes les communications de données qui ne sont pas adressées au capteur (200) et/ou au dispositif de débogage (300), et en option
le processeur (350) est configuré pour activer le filtrage par l'intermédiaire de la deuxième interface câblée (330) lorsque le capteur (200) est positionné pour se trouver dans l'état normal.

15. Système de débogage comprenant un dispositif de débogage conforme à l'une des revendications 1 à 13, et un serveur distant (600),
dans lequel le serveur distant (600) comprend une première interface (610) configurée pour établir une connexion de données avec le dispositif de débogage (300) afin de recevoir des données brutes de capteur.

16. Système de débogage selon la revendication 15, comprenant en outre :
une mémoire (630) destinée à stocker les données brutes de capteur reçues par l'intermédiaire de la première interface (610), et
un processeur (600) configuré pour effectuer des opérations de validation statistique sur les données brutes de capteur stockées et pour télécharger vers l'amont des bibliothèques vers le dispositif de débogage (300) par l'intermédiaire de la première interface (610).
